# EUROPEAN PATENT SPECIFICATION

(11) **EP 2 503 820 B1**
(45) Date of publication and mention of the grant of the patent: **06.03.2019**
(21) Application number: 11731689.3
(22) Date of filing: 07.01.2011
(51) Int. Cl.: H04W 36/14, H04W 74/08

(54) **TERMINAL AND HANDOVER METHOD**
ENDGERÄT UND ÜBERGABEVERFAHREN
TERMINAL ET PROCÉDÉ DE TRANSFERT

(30) Priority: 11.01.2010 CN 201010004557
(43) Date of publication of application: 26.09.2012
(73) Proprietor: ZTE Corporation, Shenzhen, Guangdong 518057 (CN)
(72) Inventor: DU, Zhongda, Guangdong 518057 (CN); CHEN, Zhongming, Guangdong 518057 (CN)
(74) Representative: Rapisardi, Mariacristina
(86) International application number: PCT/CN2011/070102
(87) International publication number: WO 2011/082688

(56) References cited:
- WO-A1-2010/002692
- CN-A- 101 128 062
- CN-A- 101 128 063
- CN-A- 101 523 816
- CN-A- 101 523 816
- Anonymous: "Handoff - Wikipedia, the free encyclopedia", , 6 February 2009 (2009-02-06), XP055309755, Retrieved from the Internet: URL:https://web.archive.org/web/2009020616 4407/http://en.wikipedia.org/wiki/Handoff [retrieved on 2016-10-12]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 9)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 1 September 2009 (2009-09-01), pages 1-165, XP050377587,
- CATT: "Handover for Carrier Aggregation", 3GPP TSG RAN WG2 MEETING #66BIS R2-09,, 29 June 2009 (2009-06-29), pages 1-3, XP008153769,

## Description

### Field of the invention

The present invention relates to the field of communications, and in particular to a handover method and a terminal.

### Background of the invention

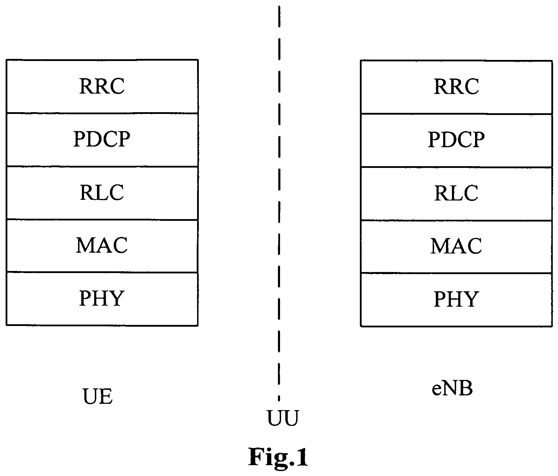

Fig. 1 shows a diagram of the protocol stack between a user equipment (UE), or called a terminal, and an eNode-B (eNB) according to the relevant technology; as shown in Fig. 1, the protocol stack of an interface between the UE and the eNB in a long term evolution (LTE) system is divided into a plurality of protocol layers as follows from the bottom to the top: physical layer (PHY), media access control (MAC) layer, radio link control (RLC) layer, packet data convergence protocol (PDCP) layer, and radio resource control (RRC) layer, in which, the PHY layer mainly transmits information to the MAC or higher layers through a transmission channel; the MAC layer mainly provides data transmission through a logic channel and takes charge of radio resource allocation, to finish the functions such as hybrid automatic repeat request (HARQ), scheduling (SCH), priority processing and multiplexing (MUX); the RLC layer mainly provides the segmentation and retransmission services of the user data and control data; the PDCP layer mainly finishes the data transmission for the RRC or user plane upper layer; the RRC mainly finishes broadcast, paging, radio resource control connection management, radio bearer control, mobility function, terminal measurement report and control. Before the UE sends data to the eNB, the UE needs to acquire the uplink synchronization with the eNB, that is, acquire time advance (TA) of transmission time; wherein the UE achieves the object above by a random access process which is implemented in the MAC layer.

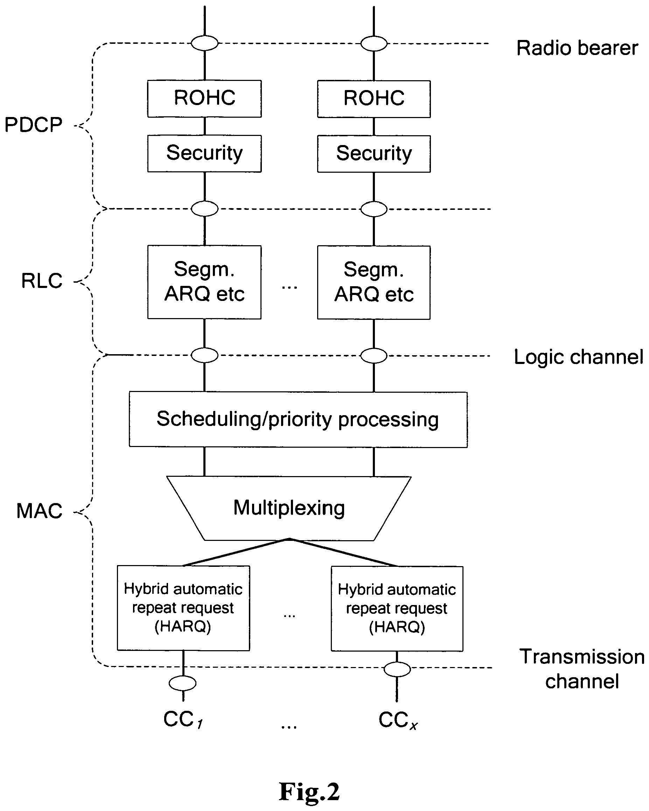

In order to provide higher data rate for mobile subscribers, the long term evolution advance (LTE-A) system proposes a carrier aggregation (CA) technology, with a purpose of providing greater broadband for the UE with corresponding capability to improve the peak rate of UE. In the LTE, the greatest downlink transmission band width supported by system is 20MHz; the CA technology is to aggregate two or more component carriers (CC) to support a transmission band width greater than 20MHz but not exceeding 100MHz. The interface protocol stack between UE and eNB is mainly reflected in the difference between the MAC layer and the PHY layer. In the PHY layer, CC is dedicated, and the difference of the MAC layer can be seen by taking Fig. 2 (Figure 5.2.1-2 Layer 2 Structure for the UL in 36.912) for example; in the MAC layer, for the HARQ, CC is dedicated; for the scheduling, priority processing and multiplexing, CC is common.

At present, in the condition that frequency spectrum resource is tense, there might exist a phenomenon that continuous CCs on a frequency domain can not be allocated to an operator to use; therefore, CA can be divided into continuous CA and discontinuous CA according to whether each CC is continuous on the frequency domain, wherein the continuous CA means that each CC on the frequency domain is continuous, while the discontinuous CA means that each CC on the frequency domain is not continuous. The CA can be divided into single-band CA and over-multiple-frequency-band CA according to whether each CC is in the same frequency band, wherein the single band CA means that all CCs participating the CA are in the same frequency band, and the single band CA can be continuous CA or discontinuous CA; the over-multiple-frequency-band CA means that the CCs participating the CA can be from different frequency bands, and the over-multiple-frequency-band CA can only be discontinuous CA. The LTE-A UE with CA capability can transmit and receive data on a plurality of CCs at the same time, while the LTE UE can only transmit and receive data on an LTE compatible CC. Correspondingly, the transmitting equipment and receiving equipment of the UE can be a set of base band equipment, with a single frequency band which has a band width greater than 20MHz, also can be a plurality of base band equipment, with multiple frequency bands each of which has a band width less than 20MHz.

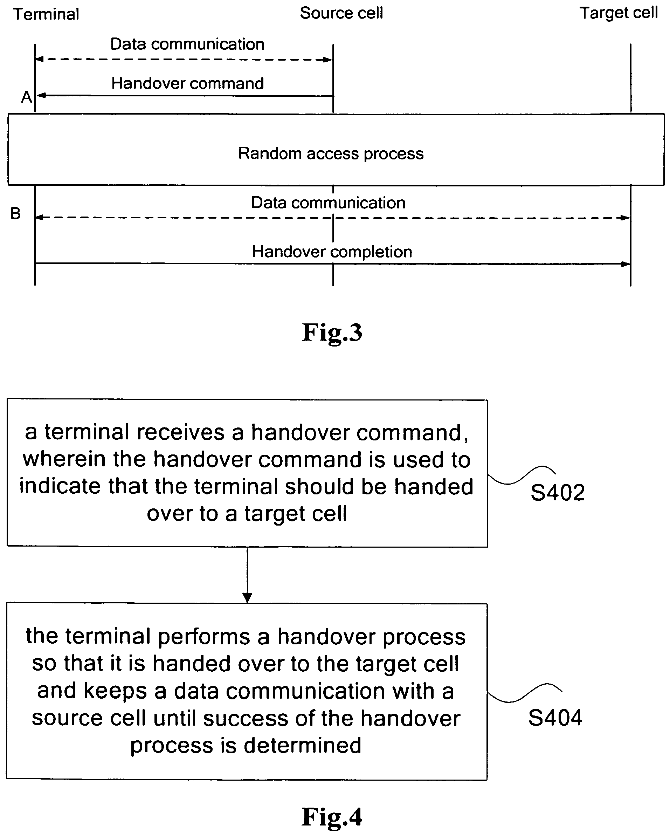

In a mobile communication system, in order to guarantee service quality and provide good service experience for users, when a UE establishes a connection with a network in a cell, the UE still needs to measure the signal quality of the serving cell and adjacent cells and selects a proper cell to perform handover, so as to meet the mobility requirement. Fig. 3 shows a flowchart of the handover according to the relevant technology; as shown in Fig. 3, in the LTE system, when the UE receives a command from the network side and needs to perform handover (point A shown in Fig. 3), the user plane reset (including the reset of the MAC layer, the reconstruction of the PDCP layer and the reconstruction of the RLC layer) is performed and the configurations of the MAC layer, the PDCP layer and the RLC layer are updated according to the handover command, the configuration including configuring the bottom layer to adopt an integrity protection algorithm and a ciphering algorithm of the target cell, and a random access is performed at the target cell, after the random access is finished, the UE can communicate with the target cell (point B shown in Fig. 3); finally, the UE sends a handover complete command to the target cell. When the UE performs the random access process at the target cell, due to the capability of the UE, the data communication between the UE and the source cell needs to be interrupted. Between point A and point B, the UE can not communicate with the source cell or the target cell normally, and this period is called the interruption time of handover, wherein the interruption time is the time occupied by the random access process, that is, the time from the start of the random access to the end of the random access.

In the scene of CA, the interruption time of handover in the mobility management is required to be 10.5 milliseconds (referring to section 16.5 in 36.912, Table 16.3-1: U-Plane interruption in LTE-Advanced); in present actual. condition, the interruption time is between 20 milliseconds to 30 milliseconds. From the description in the Table 16.5-1 in 36.912, the time occupied by the random access process is a main constituent part of the interruption time of handover; if the terminal handover time is too long, the normal service of the UE would be seriously impacted.

Wikipedia (see https://web.archive.org/web/20090206164407/http:// en.wikipedia.org/wiki/Handoff) discusses soft-handoff, wherein a channel in the source cell is retained and used for a while in parallel with the channel in the target cell. 3GPP contribution R2-093722 discusses solutions for handover for carrier aggregation. However, the above mentioned problem still remains unsolved.

### Summary of the invention

The main object of the present invention is to provide a handover scheme, for solving the problem in the relevant technology that the normal service of the terminal is impacted due to a long handover interruption time caused by the long time occupied by the random access process.

In order to realize the object above, according to one aspect of the present invention, a handover method is provided, as defined by claim 1.

In order to realize the object above, according to another aspect of the present invention, a terminal is provided, as defined by claim 22.

By the method that the terminal performs a handover process of handing itself over to a target cell and keeps the data communication with a source cell until success of the handover process is determined, the present invention solves the problem in the relevant technology that the normal service of the terminal is impacted due to a long handover interruption time caused by the long time occupied by the random access process, thereby reducing and even eliminating the interruption time of the handover in the mobility management so as to achieve a seamless handover and improve the service experience for the users.

### Brief description of the drawings

For a better understanding of this invention, accompanying drawings described hereinafter are provided to constitute one part of the application; the schematic embodiments of this invention and the description thereof are used to illustrate the present invention but to constitute an improper limit for the present invention. In the accompanying drawings:
Fig. 1 shows a diagram of the protocol stack between UE and eNB according to the relevant technology;
Fig. 2 shows a structure diagram of MAC uplink according to the relevant technology;
Fig. 3 shows a flowchart of the handover according to the relevant technology;
Fig. 4 shows a flowchart of a handover method according to the embodiment of the present invention;
Fig. 5 shows a diagram of a handover method according to the embodiment of the present invention;
Fig. 6 shows a flow diagram of a handover method according to the embodiment of the present invention;
Fig. 7 shows a diagram of UE composition structure according to the relevant technology;
Fig. 8 shows a diagram of UE composition structure according to embodiment of the present invention;
Fig. 9 shows a diagram of a first preferred example according to the embodiment of the present invention;
Fig. 10 shows a flowchart of a first preferred example according to the embodiment of the present invention;
Fig. 11 shows a diagram of a second preferred example according to the embodiment of the present invention;
Fig. 12 shows a diagram of a third preferred example according to the embodiment of the present invention;
Fig. 13 shows a flowchart of a third preferred example according to the embodiment of the present invention;
Fig. 14 shows a diagram of a fourth preferred example according to the embodiment of the present invention;
Fig. 15 shows a diagram of a fifth preferred example according to the embodiment of the present invention.

### Detailed description of the invention

The present invention is described below in detail by reference to the accompanying figures in conjunction with embodiments. It should be noted that the embodiments and the characteristics of the embodiments in the present invention can be combined if no conflict is caused.

According to the embodiment of the present invention, a handover method is provided. Fig. 4 shows a flowchart of a handover method according to the embodiment of the present invention; as shown in Fig. 4, the method comprises the following steps that:
S402: a terminal receives a handover command, wherein the handover command is used to indicate that the terminal should be handed over to a target cell.
S404: the terminal performs a handover process so that it is handed over to the target cell and keeps a data communication with a source cell until a success of the handover process is determined, wherein the handover process comprises: a random access process.

Specifically, the method can be understood as that: the terminal keeps the data communication with the source cell before the handover; after receiving a command of handing itself over to a target cell, the terminal performs the handover process of handing itself over to the target cell; preferably, after determining the success of handing itself over to the target cell (for example, after the random aces process is completed), the terminal terminates the data communication with the source cell and starts a data communication with the target cell, or the terminal first starts a data communication with the target cell and then terminates the data communication with the source cell.

Hereafter, the terminal sends a handover complete message to the target cell.

The random access process above comprises one of the following: random access process with conflicts and random access process without conflict.

In which, the step that the terminal performs the random access process with conflicts of handing itself over to the target cell comprises the following steps that:
(1) the terminal sends a random access preamble to the target cell, wherein the random access preamble carries a common preamble;
(2) the terminal receives a random access response message from the target cell, wherein the random access response message carries TA and/or uplink grant information;
(3) the terminal sends a Message3 to the target cell, wherein the Message3 is a MAC layer message or a physical layer message; preferably, the Message3 is a control cell of MAC layer and carries a cell-radio network temporary identity (C-RNTI) of the terminal at the target cell;
(4) the terminal receives a Message4 from the target cell and confirms that the random access conflict is resolved, wherein the Message4 is a MAC layer message or a physical layer message, containing a physical layer physical downlink control channel (PDCCH) signalling; wherein the PDCCH signalling contains the content of the C-RNTI of the terminal at the target cell. If the terminal receives the Message4 and confirms that the conflict is resolved, the terminal considers (determines) that the handover process is successful.

After Step (4), the method further comprises a step: the terminal sends a Message5 to the target cell, wherein the Message5 is used to indicate the completion of handover.

It should be noted that: the target cell is configured to send the random access response message and/or Message4 to the terminal directly or via the source cell; the terminal is configured to send the Message3 to the target cell directly or via the source cell.

In which, the step that the terminal performs the random access process without conflict of handing itself over to the target cell comprises the following steps that: the terminal sends a random access preamble to the target cell, wherein the random access preamble carries a dedicated preamble and is a dedicated resource configured for the terminal by the target cell; then the terminal receives a random access response message directly sent by the target cell, or the terminal receives a random access response message sent by the target cell via the source cell, wherein the random access response message carries TA and/or uplink grant information; after receiving the random access response message, the terminal considers (determines) that the handover process is successful; after determining the success of the handover process, the terminal sends to the target cell a Message3 which is used to indicate the completion of handover.

After the terminal receives the handover command and before the terminal determines the success of the handover process, one or more uplink carriers and/or one or more downlink carriers update the configuration of an underlying protocol according to the handover command and perform the random access process with the target cell.

After determining the success of the handover process, the terminal updates the configuration of the underlying protocol of other carriers according to the handover command, wherein other carriers refer to the configured carriers in the handover command other than those carriers performing the random access process.

The underlying protocol above is the carrier-related MAC layer protocol and physical layer protocol. After determining the success of the handover process, the terminal updates the configuration of a high-layer protocol according to the handover command.

The high-layer protocol comprises carrier-unrelated PDCP, RLC and MAC layer protocols.

The high-layer protocol comprises carrier-unrelated RRC layer protocol.

After determining the success of the handover process, the terminal accomplishes the reset process of the user interface protocol, wherein the reset comprises MAC layer reset, PDCP layer reconstruction and RLC layer reconstruction.

The user interface protocol comprises PDCP, RLC and MAC layer protocols.

With the embodiment above, the terminal is enabled to keep the data communication with the source cell still during the random access process at the target cell, thus the interruption time of the handover in the mobility management can be reduced and even eliminated. Besides, it is defined that the time for terminating the data communication between the terminal and the source cell is after the completion of the random access process.

It should be noted that the data communication mentioned in the embodiment refers to the exchange of packet of use plane or control plane between the terminal and eNB. The main function of the handover execution process is that the terminal obtains the uplink synchronization information on the target cell so as to start the data communication with the target cell. Generally, the handover execution process comprises a random access process. Provided that the uplink random access resource during the random access process is decided by the terminal itself, then the random access process also needs to solve the problem of identity conflict.

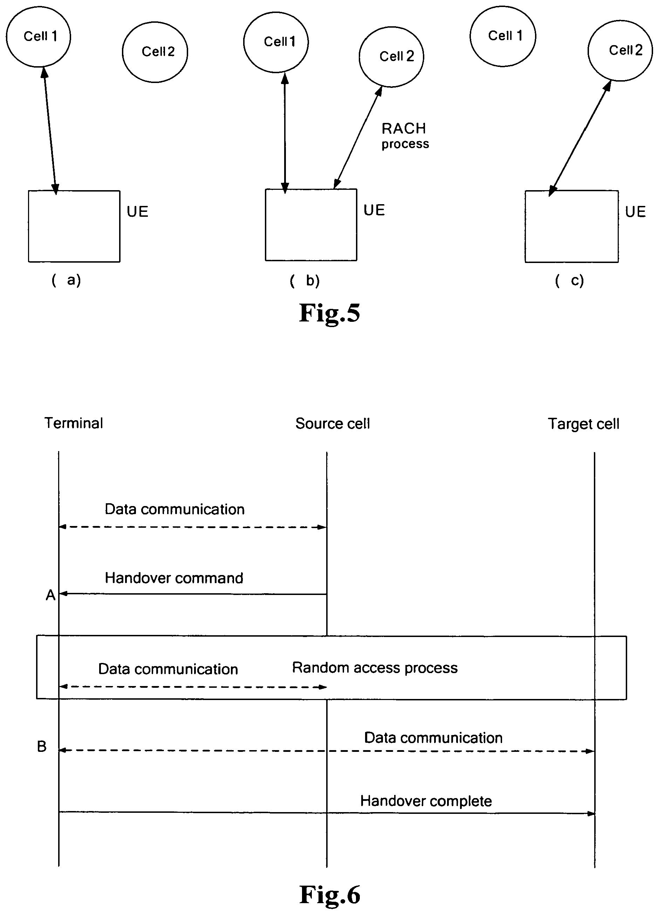

The steps above are illustrated below in conjunction with Fig. 5 and Fig. 6. Fig. 5 shows a diagram of a handover method according to the embodiment of the present invention; as shown in Fig. 5, in (a) of Fig. 5, the UE communicates with the source cell (for example, cell 1) normally; in (b) of Fig. 5, the UE receives a command of handing itself over to the target cell (for example, cell 2), and the UE immediately initiates a random access to the cell 2, however, the communication between the UE and the cell 1 is still maintained; in (c) of Fig. 5, the UE performs the random access to the cell 2 successfully, communicates with the cell 2 normally and terminates the communication with the cell 1; then the handover is completed.

Fig. 6 shows a flow diagram of a handover method according to the embodiment of the present invention; as shown in Fig. 6, the terminal performs the data communication with the source cell at first; at point A in Fig. 6, the terminal receives a handover command; while keeping the communication with the source cell, the terminal starts to initiate a random access process on the target cell; after the completion of the random access process, the terminal terminates the communication with the source cell at point B and starts to communicate with the target cell. The terminal also informs the target cell of a handover complete message.

Preferably, the target cell and the source cell can be in the same eNB, also can be in different eNBs; can be synchronous in time or asynchronous in time; can be in the same frequency band, also can be in different frequency bands.

Preferably, the steps above might not be executed based on the sequence above; for example, at point B, the terminal can first start the communication with the target cell and then interrupt the communication with the source cell.

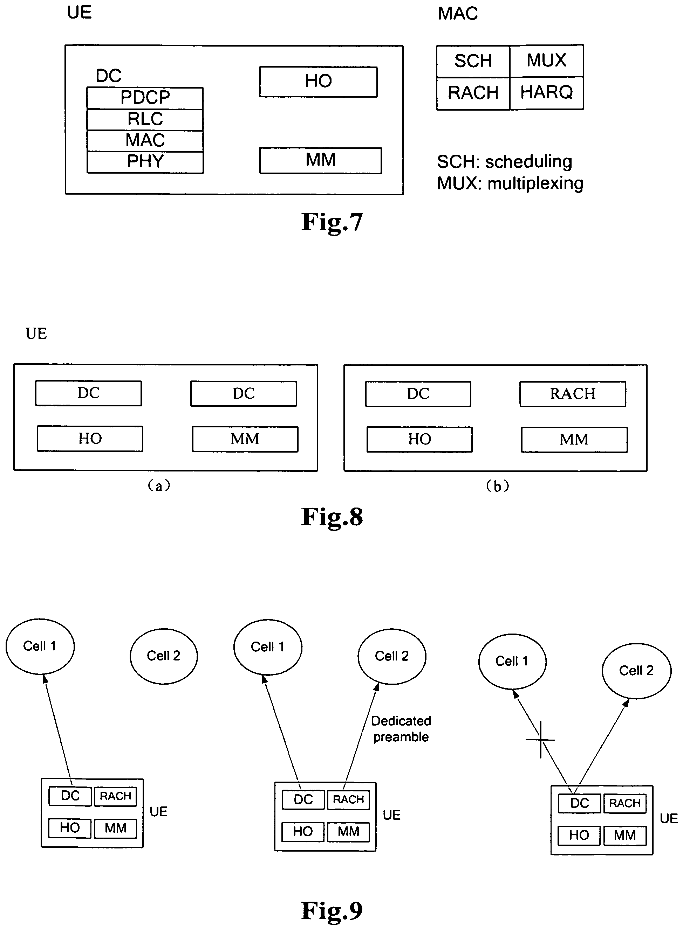

In the relevant technology, in order to complete the handover operation, the UE may comprise several logic modules as follows: a handover module (including the module receiving a handover command of network side, simplified as HO), a measurement module (including the module receiving a measurement control command of network side and performing measurement and measurement report, simplified as MM), a data communication module (the module performing exchange of packet of user plane or control plane with eNB, simplified as DC). Fig. 7 shows a diagram of UE composition structure according to the relevant technology; as shown in Fig. 7, in terms of the protocol layer, the data communication module from the bottom to the top comprises the processing of PHY, MAC, RLC and PDCP protocol layers; of course, the data communication module also comprises a module for performing the random access process on the MAC layer, wherein the MAC layer approximately is divided into SCH, MUX, RACH and HARQ.

Fig. 8 shows a diagram of UE composition structure according to the embodiment of the present invention; as shown in Fig. 8, in order to complete the handover in the embodiment, according to the capability of UE, there might be more DC modules, as shown in (a) of Fig. 8. Another implementation mode of the terminal is as shown in (b) of Fig. 8, a random access channel (RACH) module is added in (b), wherein the RACH module is a single module separated from the DC module, can work based on the downlink system time of the target cell and can finish the random access function including conflict or non-conflict based random access process. For the conflict based random access process, the RACH module also needs to finish the function of HARQ. The RACH needs a corresponding separate PHY layer. The handover of the embodiment is described below in detail in conjunction with the modules in the terminal.

According to the embodiment of the present invention, the provided terminal comprises: a handover module used for receiving a handover command, wherein the handover command is used to indicate that the terminal should be handed over to a target cell; a communication module used for performing a handover process of handing itself over to the target cell; a first data communication module used for keeping the data communication with a source cell until success of the handover process is determined. It should be noted that the communication module comprises one of the following: a random access RACH module, a second data communication module.

Preferably, when the handover process is a random access process, the first data communication module is further used for terminating the data communication with the source cell, after the communication module completes the random access process of handing itself over to the target cell.

Preferably, the second data communication module is further used for starting a data communication with the target cell after or before the first data communication module terminates the data communication with the source cell, and sending a handover complete message to the target cell when determining the success of the handover process after or before the first data communication module terminates the data communication with the source cell.

Preferably, when performing the random access process with conflicts of handing itself over to the target cell, the communication module is further used for sending to the target cell a random access preamble which carries a common preamble code, receiving from the target cell a random access response message which carries TA and/or uplink grant information, sending, to the target cell, a Message3 which is a MAC layer message or a physical layer message and carries a C-RNTI of the terminal at the target cell, receiving from the target cell a Message4 and confirming that the random access conflict is resolved, wherein the Message4 is a MAC layer message or a physical layer message and contains the physical layer PDCCH signalling that contains the content of the C-RNTI of the terminal at the target cell; after the terminal receives the Message4 and confirms that the conflict is resolved, the terminal considers (determines) that the handover process is successful, and sends to the target cell a Message5 which is used to indicate the completion of the handover process.

Preferably, when performing the random access process without conflict of handing itself over to the target cell, the communication module is further used for sending to the target cell a random access preamble which carries a dedicated preamble that is a dedicated resource configured for the terminal by the target cell, receiving the random access response message sent by the target cell directly or receiving the random access response message sent by the target cell via the source cell, wherein the random access response message carries TA and/or uplink grant information; after the terminal receives the random access response message, the terminal considers (determines) that the handover process is successful, and sends to the target cell a Message3 which is used to indicate the completion of the handover.

After the handover module receives the handover command and before the success of the handover process, the communication module has one or more uplink carriers and/or one or more downlink carriers updating the configuration of underlying protocol according to the handover command and performing the random access process with the target cell, wherein the underlying protocol is the carrier-related MAC layer protocol and physical layer protocol.

After the success of the handover process, the communication module is further used for updating the configuration of the underlying protocol of other carriers according to the handover command, wherein other carriers refer to the configured carriers in the handover command other than the carriers performing the random access process; the underlying protocol is the carrier-related MAC layer protocol and physical layer protocol.

After the success of the handover process, the communication module is further used for updating the configuration of high-layer protocol according to the handover command, wherein the high-layer protocol comprises carrier-unrelated PDCP, RLC and MAC layer protocols.

The preferred examples of the embodiment are described below in detail in conjunction with accompanying drawings. In the following preferred examples, each CC is synchronous or asynchronous in the LTE-A cell; the carrier of the source cell and the carrier of the target cell in LTE or LTE-A are synchronous or asynchronous; the source cell and the target cell of LTE or LTE-A are in the same eNB, or different eNBs, wherein the processing is the same.

### Preferred Example 1

Fig. 9 shows a diagram of a first preferred example according to the embodiment of the present invention; as shown in Fig. 9, cell 1 is the cell of LTE and supports a CC1 which is located in the frequency band 1; cell 2 is the cell of LTE, wherein the cell 2 is an adjacent cell of the cell 1 and supports a CC2 which is located in the frequency band 1. The transmitting equipment and receiving equipment of the UE is a set of base band equipment, which has a single frequency band with band width less than 20MHz, a first data communication module and an RACH module that has a corresponding PHY layer; the cell 1 belongs to eNB 1 and the cell 2 belongs to eNB 2.

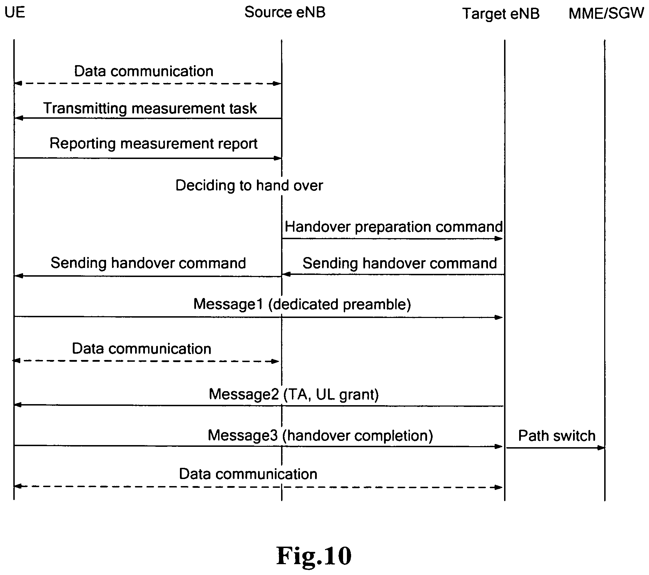

Fig. 10 shows a flowchart of a first preferred example according to the embodiment of the present invention; the flow of the example is described below in conjunction with Fig. 10.

The current UE is in a connection state in the cell 1. The network side transmits to the UE a measurement task (measurement control) of a trigger event (A3) that the adjacent cell has better quality of service than the serving cell, wherein the carrier frequency of the measured object is CC2.

The UE performs the measurement, finds that the CC2 of the cell 2 meets the trigger condition of the event A3 and sends the measurement report to the network side.

The network side decides to enable the UE to hand over to the cell 2 (handover decision), and sends a handover preparation command (handover request) to the cell 2.

After receiving the handover preparation command, the cell 2 allocates a preamble which is included in the handover command (handover request ACK) to be sent to the cell 1, wherein the handover command further includes the C-RNTI, allocated by the cell 2, of the terminal on the cell 2, the information of the cell 2 (for example, including CC2 and the related information of CC2, other information of the cell 2), then the cell 1 forwards the handover command to the UE (RRC reconfiguration (handover)).

After the UE receives the handover command, the RACH module and the corresponding physical layer update the configuration of underlying protocol according to the requirement of handover command, and perform the random access process with the cell 2; that is, the RACH module of the terminal sends a random access preamble (Message1) to the cell 2 through the corresponding physical layer, wherein the Message1 contains the dedicated preamble provided by the cell 2; the dedicated preamble is a dedicated resource configured for the terminal by the cell 2.

After receiving the Message1, the cell 2 reserves resource for the UE and returns a Message2 to the UE, the Message2 including TA and/or the grant information transmitted by the UE on uplink (UL grant).

After the UE receives the Message2, the function execution of the RACH module is finished, the random access process without conflict executed at the cell 2 is ended, the UE obtains the downlink synchronization with the cell 2 and TA, considers that the handover is successful, accomplishes the reset process of the user interface protocol, the reset including MAC layer reset, PDCP layer reconstruction and RLC layer reconstruction, updates the configurations of the carrier-related MAC and PHY layers of the first data communication module and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, starts the communication with the cell 2, sends to the cell 2 a Message3 (HO complete) which is used to indicate the completion of handover, then the cell 2 notifies the core network to perform path switch and the first data communication module terminates the communication with the cell 1.

### Preferred Example 2

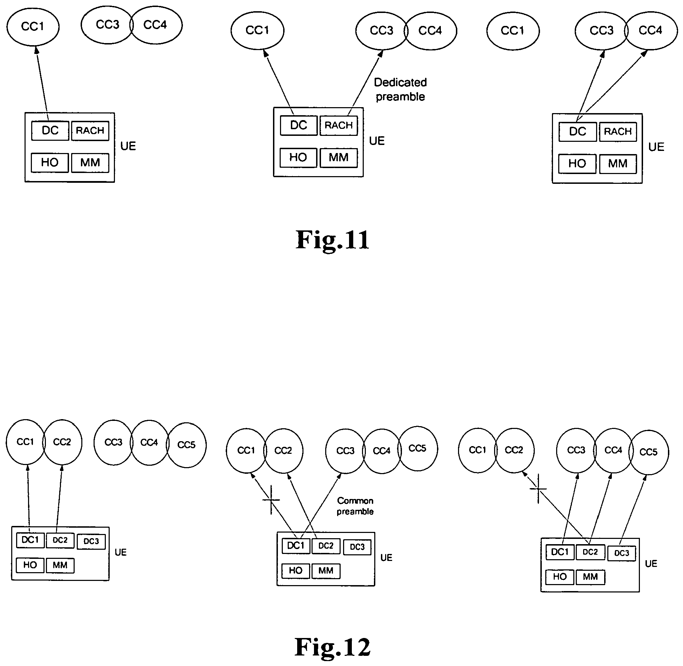

Fig. 11 shows a diagram of a second preferred example according to the embodiment of the present invention; as shown in Fig. 11, cell 1 is the cell of LTE and supports a CC1 which is located in the frequency band 1; cell 2 is the cell of LTE-A, wherein the cell 2 is an adjacent cell of the cell 1 and supports the aggregation of two CCs, that is, CC3 and CC4, both of which are located in the frequency band 1 and are continuous. The transmitting equipment and receiving equipment of the UE is a set of base band equipment, which has a single frequency band with band width of 40MHz, a first data communication module, an RACH module that has a corresponding PHY layer; the cell 1 belongs to eNB 1 and the cell 2 belongs to eNB 2.

The current UE is in a connection state in the cell 1. The first data communication module takes charge of the data communication with the cell 1 on the CC1. The network side transmits to the UE a measurement task of a trigger event (A3) that the adjacent cell has better quality of service than the serving cell, wherein the carrier frequency of the measured object is CC3 and CC4; for the flow, refer to the flow shown in Fig. 10 in Embodiment one, no further description is needed here.

The UE performs the measurement, finds that the CC3 and CC4 of the cell 2 meet the trigger condition of the event A3 and sends the measurement report to the network side.

The network side decides to enable the UE to hand over to the cell 2, and sends a handover preparation command to the cell 2.

After receiving the handover preparation command, the cell 2 allocates a preamble, selects a CC as the CC for the UE to perform the random access at the cell 2 (for example, CC3) and includes the information in the handover command to send to the cell 1, wherein the handover command further includes the C-RNTI allocated by the cell 2, the information of the cell 2 (for example, including CC3 and CC4, information of each carrier and other information of the cell 2), then the cell 1 forwards the handover command to the UE.

After the UE receives the handover command, the RACH module and the corresponding physical layer update the configuration of underlying protocol according to the requirement of handover command, and perform the random access process with the cell 2; that is, the RACH module of the terminal sends a on the CC3, wherein the contains the dedicated preamble provided by the cell 2. After receiving the Message1, the cell 2 reserves resource for the UE and returns a Message2 to the UE on CC3, wherein the Message2 includes TA and/or UL grant; the cell 2 also can forward the Message2 to the UE through the cell 1.

After the UE receives the Message2 on the CC3, the function execution of the RACH module is finished, the random access process without conflict at the cell 2 is ended, the UE obtains the downlink synchronization with the cell 2 and TA, considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication module and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, starts the communication with the cell 2, sends to the cell 2 a Message3 (handover complete), then the cell 2 notifies the core network to perform path switch and the first data communication module completely terminates the communication with the cell 1; after that, the cell 2 can add CC4 according to the requirement; the UE may initiate a random access process on the CC4 or not according to whether the CC4 is synchronous with the CC3.

### Preferred Example 3

Fig. 12 shows a diagram of a third preferred example according to the embodiment of the present invention; as shown in Fig. 12, cell 1 is the cell of LTE-A and supports the aggregation of two CCs, that is, CC1 and CC2, both of which are located in the frequency band 1 and are discontinuous; cell 2 is the cell of LTE-A, wherein the cell 2 is an adjacent cell of the cell 1 and supports the aggregation of three CCs, that is, CC3, CC4 and CC5, of which the CC3 and CC4 are located in the frequency band 2 and are discontinuous, and the CC5 is located in the frequency band 3. The transmitting equipment and receiving equipment of the UE is three sets of base band equipment, with three frequency bands each of which has a band width less than 20MHz, that is to say, and the UE has three first data communication modules. Both cell 1 and cell 2 belong to eNB 1.

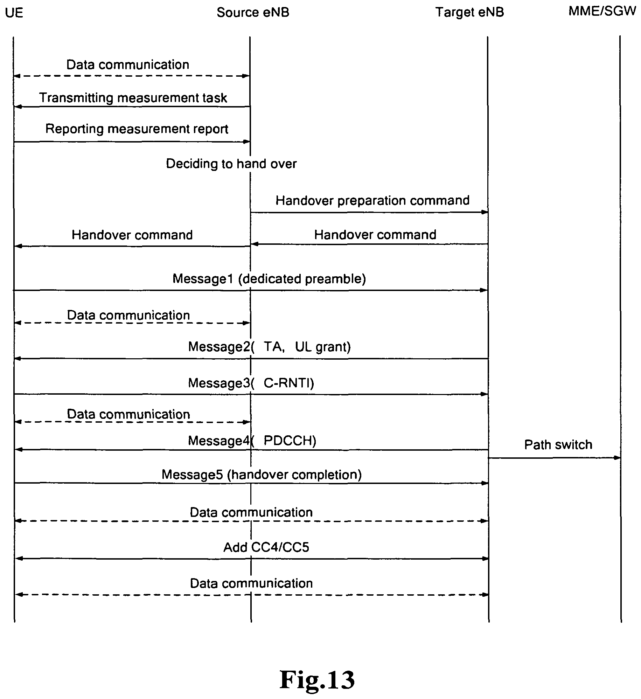

Fig. 13 shows a flowchart of a third preferred example according to the embodiment of the present invention; the flow of the example is illustrated below in conjunction with Fig. 13.

The current UE is in a connection state in the cell 1 and uses the CC1 and the CC2 at the same time; the first data communication module 1 takes charge of the data communication on the CC1; the first data communication module 2 takes charge of the data communication on the CC2; and the first data communication module 3 is idle. The network side transmits to the UE a measurement task of a trigger event (A3) that the adjacent cell has better quality of service than the serving cell, wherein the carrier frequency of the measured object is CC3, CC4 and CC5.

The UE performs the measurement, finds that the CC3, CC4 and CC5 of the cell 2 meet the trigger condition of the event A3 and sends the measurement report to the network side.

The network side decides to enable the UE to hand over to the cell 2, and sends a handover preparation command to the cell 2.

After receiving the handover preparation command, the cell 2 includes the information (for example, including CC3, CC4 and CC5, information of each carrier and other information of the cell 2) of the cell 2 in the handover command to send to the cell 1, wherein the handover command further includes the C-RNTI allocated by the cell 2, then the cell 1 forwards the handover command to the UE and notifies the first data communication module 1 of the UE to interrupt the data communication with the cell 1 and switch to the second data communication module to initiate a random access process on the cell 2.

After the UE receives the handover command, the CC1 related MAC layer, PHY layer and the corresponding physical layer of the first data communication module 1 update the configuration of underlying protocol according to the handover command, and perform the random access process with the cell 2, that is, interrupt the communication with the cell 1 on the CC1, switch to the second data communication module and select to initiate on the CC3 a random access process, that is, to send a including a common preamble. Since the UE has three sets of base band equipment, at this moment, the UE might not interrupt the communication with the cell 1 on the first data communication module 1, but transform the first data communication module 3 to the second data communication module to initiate a random access process of the cell 2 on the CC3.

After receiving the Message1, the cell 2 reserves resource for the UE and returns a Message2 to the UE on CC3, wherein the Message2 includes TA and/or UL grant; the Message2 also can be forwarded to the UE by the cell 1.

After receiving the Message2 on the CC3, the UE performs the related processing and sends a Message3 to the cell 2, wherein the Message3 is a MAC layer message or a physical layer message, including the C-RNTI of the terminal on the cell 2; if the UE receives the Message2 forwarded by the cell 1, the Message3 also can be forwarded to the cell 2 by the cell 1.

After receiving the Message3, the cell 2 starts to send a Message4 on the CC3, wherein the Message4 is a MAC layer message or a physical layer message, containing the physical layer PDCCH signalling in which the content of the C-RNTI of the terminal at the target cell is contained, then the cell 2 notifies the core network to perform path switch.

After receiving the PDCCH on the CC3, the UE confirms that the random access conflict is resolved, the random access process with conflicts of the UE at the cell 2 is ended, the UE obtains the downlink synchronization with the cell 2 and TA, and thus considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication modules 2 and 3 and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, the UE starts to communicate with the cell 2 normally and sends a Message5 (handover complete) to the cell 2, the UE starts to communicate with the cell 2 normally and can completely interrupt the communication with the cell 1 at this moment; after that, the cell 2 can add CC4 and CC5 according to the requirement; the UE may initiate a random access process on the CC4 and CC5 or not according to whether the CC4 and CC5 are synchronous with the CC3.

### Preferred Example 4

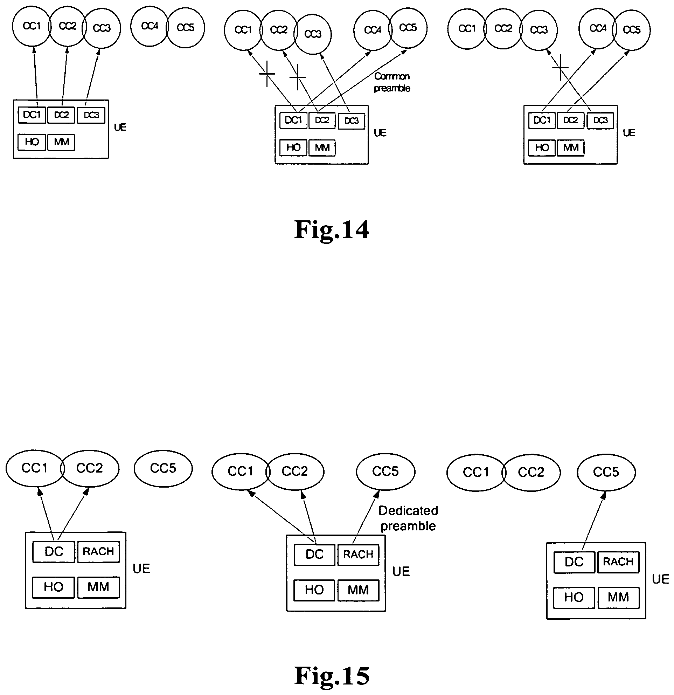

Fig. 14 shows a diagram of a fourth preferred example according to the embodiment of the present invention; as shown in Fig. 14, cell 1 is the cell of LTE-A and supports the aggregation of three CCs, that is, CC1, CC2 and CC3, all of which are located in the frequency band 1 and are discontinuous; cell 2 is the cell of LTE-A, wherein the cell 2 is an adjacent cell of the cell 1 and supports the aggregation of two CCs, that is, CC4 and CC5, both of which are located in the frequency band 2 and are discontinuous. The transmitting equipment and receiving equipment of the UE is three sets of base band equipment, with three frequency bands each of which has a band width less than 20MHz, that is to say, and the UE has three first data communication modules. The cell 1 belongs to eNB 1 and the cell 2 belongs to eNB 2.

The current UE is in a connection state in the cell 1 and uses CC1, CC2 and CC3 at the same time; DC1, DC2 and DC3 take charge of the data communication on the CC1, CC2 and CC3 respectively. The network side transmits to the UE a measurement task of a trigger event (A3) that the adjacent cell has better quality of service than the serving cell, wherein the carrier frequency of the measured object is CC4 and CC5. The process can be referred to Fig. 13 in Example 3, and no further description is needed here.

The UE performs the measurement, finds that the CC4 and CC5 of the cell 2 meet the trigger condition of the event A3 and sends the measurement report to the network side.

The network side decides to enable the UE to hand over to the cell 2, and sends a handover preparation command to the cell 2.

After receiving the handover preparation command, the cell 2 includes the information (for example, including CC4 and CC5, information of each carrier and other information of the cell 2) of the cell 2 in the handover command to send to the cell 1, wherein the handover command further includes the C-RNTI4 on the CC4 and the C-RNTI5 on the CC5 allocated by the cell 2, then the cell 1 forwards the handover command to the UE.

After receiving the handover command, the UE decides to make the CC1 related MAC layer, PHY layer and the corresponding physical layer of the first data communication module 1 update the configuration of underlying protocol according to the handover command, and perform the random access process with the cell 2; that is, interrupt the communication with the cell 1 on the CC1 and select to initiate on the CC4 a random access process of the cell 2, that is, to send a Message1 which includes a common preamble and the C-RNTI4. The UE also decides to make the CC2 related MAC layer, PHY layer and the corresponding physical layer of the first data communication module 2 update the configuration of underlying protocol according to the handover command, and perform the random access process with the cell 2; that is, interrupt the communication with the cell 1 on the CC2 and select to initiate on the CC5 a random access process of the cell 2, that is, to send a Message1 which includes a common preamble and the C-RNTI5. In the following process, the CC4 and the CC5 are independent.

After receiving the Message1 on the CC4, the cell 2 reserves resource for the UE and returns a Message2 to the UE on CC4, wherein the Message2 includes TA and/or UL grant; after receiving the on the CC5, the cell 2 reserves resource for the UE and returns a Message2 to the UE on CC5, wherein the Message2 includes TA and/or UL grant.

After receiving the Message2 on the CC4, the UE performs the related processing and sends a MAC CE including C-RNTI4 to the cell 2 on the CC4; after receiving the Message2 on the CC5, the UE performs the related processing and sends a MAC CE including C-RNTI5 to the cell 2 on the CC5.

After receiving the Message2 on the CC4, the cell 2 starts to send PDCCH on the CC4; after receiving the Message2 on the CC5, the cell 2 starts to send PDCCH on the CC5. The cell 2 notifies the core network to perform path switch.

After receiving the PDCCH on the CC4 and the PDCCH on the CC5, the UE confirms that the random access conflict is resolved, the random access process with conflicts at the cell 2 is ended, thus the UE obtains the downlink synchronization with the cell 2 and TA, considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication module 3 and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, the UE starts to communicate with the cell 2 and sends a Message5 (handover complete) to the cell 2. If the UE only receives the PDCCH on the CC4, it can be considered that the random access conflict on the CC4 is resolved and the random access process with conflicts at the cell 2 is ended; the UE obtains the downlink synchronization with the cell 2 and TA, considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication modules 2 and 3 and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, the UE starts to communicate with the cell 2 normally on the CC4 and sends a Message5 (handover complete) to the cell 2, and the CC5 can be added after the CC4 is communicated normally. If the UE only receives the PDCCH on the CC5, it can be considered that the random access conflict on the CC5 is resolved and the random access process with conflicts at the cell 2 is ended; the UE obtains the downlink synchronization with the cell 2 and TA, considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication modules 1 and 3 and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, the UE starts to communicate with the cell 2 normally on the CC5 and sends a Message5 (handover complete) to the cell 2, and the CC4 can be added after the CC5 is communicated normally. At this moment, the communication with the cell 1 on the first data communication module 3 can be interrupted.

### Preferred Embodiment 5

Fig. 15 shows a diagram of a fifth preferred example according to the embodiment of the present invention; as shown in Fig. 15, cell 1 is the cell of LTE-A and supports the aggregation of two CCs, that is, CC1 and CC2, both of which are located in the frequency band 1 and are continuous; cell 2 is the cell of LTE, wherein the cell 2 is an adjacent cell of the cell 1 and supports only one CC, that is, CC5, which is located in the frequency band 1. The transmitting equipment and receiving equipment of the UE is a set of base band equipment, which has a single frequency band with band width of 40MHz, a first data communication module and an RACH module; the cell 1 belongs to eNB 1 and the cell 2 belongs to eNB 2.

The current UE is in a connection state in the cell 1 and uses the CC1 and the CC2 at the same time; DC takes charges of the data communication on the CC1 and the CC2. The network side transmits to the UE a measurement task of a trigger event (A3) that the adjacent cell has better quality of service than the serving cell, wherein the carrier frequency of the measured object is CC5. For the flow, refer to the flow shown in Fig. 10 in Embodiment one, no further description is needed here.

The UE performs the measurement, finds that the cell 2 meets the trigger condition of the event A3 and sends the measurement report to the network side.

The network side decides to enable the UE to hand over to the cell 2, and sends a handover preparation command to the cell 2.

After receiving the handover preparation command, the cell 2 allocates a preamble and includes the information in the handover command to send to the cell 1, wherein the handover command further includes the C-RNTI allocated by the cell 2 and other configuration information of the cell 2, then the cell 1 forwards the handover command to the UE.

After the UE receives the handover command, the RACH module and the corresponding physical layer update the configuration of underlying protocol according to the requirement of handover command, and perform the random access process with the cell 2; that is, the RACH module initiates a random access process at the cell 2 and sends a Message1 on the CC5, wherein the Message1 contains the dedicated preamble provided by the cell 2.

After receiving the Message 1, the cell 2 reserves resource for the UE and returns a Message2 to the UE, wherein the Message2 includes TA and/or UL grant; here, for simplifying the implementation of UE, the Message2 might not be sent to the UE directly but is sent to the cell 1 through X2 or S1, and then is forwarded to the UE by the cell 1. In this condition, the terminal RACH module only needs to use the uplink carrier resource of the corresponding physical layer.

After receiving the Message2 on the CC5, the UE performs the related processing, the function execution of the RACH module is finished, the random access process without conflict of the UE at the cell 2 is ended, the UE obtains the downlink synchronization with the cell 2 and TA, considers that the handover process is successful, accomplishes the reset process of the user interface protocol, the reset including MAC layer reset, PDCP layer reconstruction and RLC layer reconstruction, updates the configurations of the carrier-related MAC and PHY layers of the first data communication module and updates the configurations of the carrier-unrelated RRC, PDCP, RLC and MAC layer protocols according to the handover command, the configuration including configuring the bottom layer to adopt an integrity protection algorithm and a ciphering algorithm of the cell 2, starts to communicate with the cell 2 normally, sends to the cell 2 a handover complete message, then the cell 2 notifies the core network to perform path switch and interrupt the communication with the cell 1.

To sum up, with the above embodiment of the present invention, the interruption time of the handover in the mobility management can be reduced and even eliminated, thus a seamless handover is achieved and the service experience for the users is improved.

Obviously, those skilled in the art should understand that the modules and steps described above can be implemented by a common computer device; the modules or steps can be integrated on a single computing device or distributed on a network composed of a plurality of computing devices; optionally, the modules or steps can be implemented by a programming code executable by a computing device, thus they can be stored in a storage device to execute by a computing device, and in some conditions the steps described above can be executed in a different order, or they are manufactured into individual integrated circuit module respectively, or several of them can be manufactured into a single integrated circuit module to realize; in this way, the present invention is not limited to any combination of specific hardware and software.

The above is only the preferred embodiment of the present invention and not intended to limit the present invention. For those skilled in the art, various modifications and changes can be made to the present invention.

## Claims

1. A handover method, comprising the steps of:
a terminal receiving a handover command, wherein the handover command is used to indicate that the terminal should be handed over to a target cell;
the terminal performing a handover process so that it is handed over to the target cell and keeping a data communication with a source cell until a success of the handover process is determined;
the method **characterized in that**, after the terminal receives the handover command and before the success of the handover process, one or more uplink component carriers and/or one or more downlink component carriers update respective configuration of an underlying protocol according to the handover command and perform respective random access processes with the target cell, and the underlying protocol is a carrier-related MAC layer protocol and a physical layer protocol;
wherein after the success of the handover process, the terminal updates configuration of an underlying protocol of other component carriers according to the handover command, wherein the other component carriers refer to component carriers configured in the handover command excluding those component carriers performing the random access process.

2. The method according to claim 1, wherein the handover process comprises: a random access process.

3. The method according to claim 2, after the terminal completes the random access process of handing itself over to the target cell, the method further comprises:
the terminal terminating the data communication with the source cell.

4. The method according to claim 3, after the terminal completes the random access process of handing itself over to the target cell, the method further comprises:
the terminal starting a data communication with the target cell.

5. The method according to claim 4, the random access process comprises one of the following: random access process with conflicts and random access process without conflict.

6. The method according to claim 5, wherein the random access process with conflicts performed by the terminal in order to be handed over to the target cell comprises the following steps:
the terminal sending a random access preamble to the target cell;
the terminal receiving a random access response message from the target cell;
the terminal sending a Message3 to the target cell, wherein the Message3 carries a cell-radio network temporary identity (C-RNTI) of the terminal at the target cell; and
the terminal receiving a Message4 from the target cell, confirming that a random access conflict is resolved.

7. The method according to claim 6, wherein the Message3 is one of a media access control (MAC) layer message and a physical layer message.

8. The method according to claim 7, wherein the Message3 is a control cell of the MAC layer.

9. The method according to claim 6, wherein the Message4 is one of a MAC layer message and a physical layer message.

10. The method according to claim 9, wherein the Message4 contains a physical layer physical downlink control channel (PDCCH) signalling, wherein the PDCCH signalling contains content of the C-RNTI of the terminal at the target cell.

11. The method according to claim 6, wherein when the terminal receives the Message4 and confirms that the random access conflict is resolved, the terminal determines that the handover process is successful.

12. The method according to claim 6, wherein the target cell is configured to send the random access response message and/or the Message4 to the terminal directly or via the source cell; and
the terminal is configured to send the Message3 to the target cell directly or via the source cell.

13. The method according to claim 5, wherein the random access process without conflict performed by the terminal in order to be handed over to the target cell comprises the following steps:
the terminal sending a random access preamble to the target cell, wherein the random access preamble is a dedicated resource configured for the terminal by the target cell; and
the terminal receiving a random access response message from the target cell.

14. The method according to claim 13, wherein the target cell is configured to send the random access response message to the terminal directly or via the source cell.

15. The method according to claim 13, wherein after the terminal receives the random access response message, the terminal determines that the handover process is successful.

16. The method according to claim 11 or 15, wherein after the terminal determines that the handover process is successful, the terminal sends a handover complete message to the target cell.

17. The method according to any one of claims 1 to 15, after the success of the handover process, the terminal updates configuration of a high-layer protocol according to the handover command.

18. The method according to claim 17, wherein the high-layer protocol comprises carrier-unrelated packet data convergence protocol (PDCP), radio link control (RLC) and MAC layer protocols.

19. The method according to claim 17, wherein the high-layer protocol comprises carrier-unrelated radio resource control (RRC) layer protocol.

20. The method according to any one of claims 1 to 15, after the success of the handover process, the terminal accomplishes a reset process of a user interface protocol, wherein the reset process comprises MAC layer reset, PDCP layer reconstruction and RLC layer reconstruction.

21. The method according to claim 20, wherein the user interface protocol comprises PDCP, RLC and MAC layer protocols.

22. A terminal, comprising:
a handover module configured to receive a handover command, wherein the handover command is used to indicate that the terminal should be handed over to a target cell;
a communication module configured to perform a handover process so that it is handed over to the target cell; and
a first data communication module configured to keep a data communication with a source cell until a success of the handover process is determined;
the terminal **characterized in that**, after the handover module receives the handover command and before the success of the handover process, the communication module has one or more uplink component carriers and/or one or more downlink component carriers updating respective configuration of an underlying protocol according to the handover command and performing respective random access processes with the target cell, wherein the underlying protocol is a carrier-related MAC layer protocol and a physical layer protocol;
wherein after the success of the handover process, the communication module is further configured to update configuration of an underlying protocol of other component carriers according to the handover command, wherein the other component carriers refer to component carriers configured in the handover command excluding those component carriers performing the random access process.

23. The terminal according to claim 22, if the handover process is a random access process, the first data communication module is further configured to terminate the data communication with the source cell after completing the random access process of handing itself over to the target cell.

24. The terminal according to claim 23, while performing the random access process with conflicts of handing itself over to the target cell, the communication module is further configured to send a random access preamble that carries a common preamble code to the target cell, receiving a random access response message sent by the target cell directly or via the source cell, the message carrying time advance (TA) and/or uplink grant information, sending a Message3 to the target cell, the Message3 carrying an C-RNTI of the terminal at the target cell, receiving from the target cell a Message4 that contains a physical layer PDCCH signalling and confirming that the random access conflict is resolved, and sending a Message5 to the target cell, the Message5 used to indicate a completion of the handover process.

25. The terminal according to claim 23, while performing the random access process without conflict of handing itself over to the target cell, the communication module is further configured to send a random access preamble to the target cell, wherein the random access preamble is a dedicated resource configured for the terminal by the target cell, receiving a random access response message sent by the target cell directly or via the source cell, and directly sending a Message3 to the target cell, wherein the Message3 is used to indicate a completion of the handover process.

26. The terminal according to claim 23, after the success of the handover process, the communication module is further configured to update configuration of a high-layer protocol according to the handover command, wherein the high-layer protocol comprises carrier-unrelated PDCP, RLC and MAC layer protocols.

27. The terminal according to any one of claims 22 to 26, wherein the communication module comprises one of the following: a random access RACH module and a second data communication module.

28. The terminal according to claim 27, wherein the second data communication module is further configured to, after or before the first data communication module terminates the data communication with the source cell, start a data communication with the target cell and sending a handover complete message to the target cell after determining a success of the handover process.

## Patentansprüche

1. Übergabeverfahren, umfassend die Schritte:
Empfangen eines Übergabebefehls durch ein Endgerät, wobei der Übergabebefehl verwendet wird, um anzuzeigen, dass das Endgerät an eine Zielzelle übergeben werden soll;
Durchführen eines Übergabeverfahrens durch das Endgerät, so dass es an die Zielzelle übergeben wird, und Aufrechterhalten einer Datenkommunikation mit einer Quellzelle, bis ein Erfolg des Übergabeverfahrens festgestellt wird;
wobei das Verfahren **dadurch gekennzeichnet ist, dass** ein oder mehrere Uplink-Komponententräger und/oder ein oder mehrere Downlink-Komponententräger, nachdem das Endgerät den Übergabebefehl empfangen hat und vor dem Erfolg des Übergabeverfahrens, die jeweilige Konfiguration eines zugrundeliegenden Protokolls nach dem Übergabeverfahren aktualisieren und jeweilige Direktzugriffverfahren mit der Zielzelle durchführen, und das zugrundeliegende Protokoll ein trägerbezogenes MAC-Schichtprotokoll und ein physikalisches Schichtprotokoll ist;
wobei das Endgerät nach dem Erfolg des Übergabeverfahrens die Konfiguration eines zugrundeliegenden Protokolls anderer Komponententräger nach dem Übergabebefehl aktualisiert, wobei sich die anderen Komponententräger auf im Übergabebefehl konfigurierte Komponententräger beziehen, mit Ausnahme der Komponententräger, die das Direktzugriffverfahren durchführen.

2. Verfahren nach Anspruch 1, wobei das Übergabeverfahren umfasst: ein Direktzugriffverfahren.

3. Verfahren nach Anspruch 2, nachdem das Endgerät das Direktzugriffverfahren zur Übergabe an die Zielzelle abgeschlossen hat, umfasst das Verfahren ferner:
Beenden der Datenkommunikation durch das Endgerät mit der Quellzelle.

4. Verfahren nach Anspruch 3, nachdem das Endgerät das Direktzugriffverfahren zur Übergabe an die Zielzelle abgeschlossen hat, umfasst das Verfahren ferner:
Starten einer Datenkommunikation durch das Endgerät mit der Zielzelle.

5. Verfahren nach Anspruch 4, wobei das Direktzugriffverfahren einen der folgenden Schritte umfasst: Direktzugriffverfahren mit Konflikten und Direktzugriffverfahren ohne Konflikt.

6. Verfahren nach Anspruch 5, wobei das Direktzugriffverfahren mit Konflikten, die vom Endgerät durchgeführt werden, um an die Zielzelle übergeben zu werden, die folgenden Schritte umfasst: Senden einer Direktzugriffpräambel durch das Endgerät an die Zielzelle;
Empfangen einer Direktzugriffantwortnachricht durch das Endgerät von der Zielzelle;
Senden einer Nachricht3 durch das Endgerät an die Zielzelle, wobei die Nachricht3 eine temporäre Zellenfunknetz-Kennung (C-RNTI) des Endgeräts an der Zielzelle trägt; und
Empfangen einer Nachricht4 durch das Endgerät von der Zielzelle, bestätigend, dass ein Direktzugriffkonflikt gelöst ist.

7. Verfahren nach Anspruch 6, wobei die Nachricht3 eine von einer Medienzugriffssteuertreiber-(MAC)-Schicht-Nachricht und einer physikalischen Schicht-Nachricht ist.

8. Verfahren nach Anspruch 7, wobei die Nachricht3 eine Steuerzelle der MAC-Schicht ist.

9. Verfahren nach Anspruch 6, wobei die Nachricht4 eine von einer MAC-Schicht-Nachricht und einer physikalischen Schicht-Nachricht ist.

10. Verfahren nach Anspruch 9, wobei die Nachricht4 eine physikalische Downlink-Steuerkanal (PDCCH)-Signalisierung einer physikalischen Schicht enthält, wobei die PDCCH-Signalisierung den Inhalt vom C-RNTI des Endgeräts an der Zielzelle enthält.

11. Verfahren nach Anspruch 6, wobei, wenn das Endgerät die Nachricht4 empfängt und bestätigt, dass der Direktzugriffkonflikt gelöst ist, das Endgerät bestimmt, dass das Übergabeverfahren erfolgreich ist.

12. Verfahren nach Anspruch 6, wobei die Zielzelle konfiguriert ist, um die Direktzugriffsantwortnachricht und/oder die Nachricht4 direkt oder über die Quellzelle an das Endgerät zu senden; und
das Endgerät konfiguriert ist, um die Nachricht3 direkt oder über die Quellzelle an die Zielzelle zu senden.

13. Verfahren nach Anspruch 5, wobei das Direktzugriffverfahren ohne Konflikt, das vom Endgerät durchgeführt wird, um an die Zielzelle übergeben zu werden, die folgenden Schritte umfasst: Senden einer Direktzugriffpräambel durch das Endgerät an die Zielzelle, wobei die Direktzugriffpräambel eine dedizierte Ressource ist, die für das Endgerät durch die Zielzelle konfiguriert ist; und
Empfangen einer Direktzugriffantwortnachricht durch das Endgerät von der Zielzelle.

14. Verfahren nach Anspruch 13, wobei die Zielzelle konfiguriert ist, um die Direktzugriffsantwortnachricht direkt oder über die Quellzelle an das Endgerät zu senden.

15. Verfahren nach Anspruch 13, wobei das Endgerät, nachdem das Endgerät die Direktzugriffsantwortnachricht empfangen hat, bestimmt, dass das Übergabeverfahren erfolgreich ist.

16. Verfahren nach Anspruch 11 oder 15, wobei das Endgerät, nachdem das Endgerät bestimmt hat, dass das Übergabeverfahren erfolgreich ist, eine vollständige Übergabe-Nachricht an die Zielzelle sendet.

17. Verfahren nach einem der Ansprüche 1 bis 15, wobei das Endgerät nach dem erfolgreichen Übergabeverfahren die Konfiguration eines Hochschichtprotokolls nach dem Übergabebefehl aktualisiert.

18. Verfahren nach Anspruch 17, wobei das Hochschichtprotokoll trägerunabhängiges Paketdatakonvergenzprotokol (PDCP), Funkverbindungssteuerung (RLC) und MAC-SchichtProtokolle umfasst.

19. Verfahren nach Anspruch 17, wobei das Hochschichtprotokoll trägerunabhängiges Funkressourcen-Steuerungs-(RRC)-Schichtprotokoll umfasst.

20. Verfahren nach einem der Ansprüche 1 bis 15, wobei das Endgerät nach dem Erfolg des Übergabeverfahrens ein Rückstellverfahren eines Benutzerschnittstellenprotokolls durchführt, wobei das Rückstellverfahren das Rücksetzen der MAC-Schicht, die PDCP-Schichtrekonstruktion und die RLC-Schichtrekonstruktion umfasst.

21. Verfahren nach Anspruch 20, wobei das Benutzerschnittstellenprotokoll die PDCP-, RLC- und MAC-Schichtprotokolle umfasst.

22. Endgerät, umfassend:
ein Übergabemodul, das konfiguriert ist, um einen Übergabebefehl zu empfangen, wobei der Übergabebefehl verwendet wird, um anzuzeigen, dass das Endgerät an eine Zielzelle übergeben werden soll;
ein Kommunikationsmodul, das konfiguriert ist, um ein Übergabeverfahren durchzuführen, so dass es an die Zielzelle übergeben wird; und
ein erstes Datenkommunikationsmodul, das konfiguriert ist, um eine Datenkommunikation mit einer Quellzelle aufrechtzuerhalten, bis ein Erfolg des Übergabeverfahrens bestimmt ist;
wobei das Endgerät **dadurch gekennzeichnet ist, dass** das Kommunikationsmodul nach dem Empfangen des Übergabebefehls durch das Übergabemodul und vor dem Erfolg des Übergabeverfahrens einen oder mehrere Uplink-Komponententräger und/oder einen oder mehrere Downlink-Komponententräger aufweist, die die jeweilige Konfiguration eines zugrundeliegenden Protokolls nach dem Übergabebefehl aktualisieren und jeweilige Direktzugriffverfahren mit der Zielzelle durchführen, und wobei das zugrundeliegende Protokoll ein trägerbezogenes MAC-Schichtprotokoll und ein physikalisches Schichtprotokoll ist;
wobei das Kommunikationsmodul nach dem Erfolg des Übergabeverfahrens ferner konfiguriert ist, um die Konfiguration eines zugrundeliegenden Protokolls anderer Komponententräger nach dem Übergabebefehl zu aktualisieren, wobei sich die anderen Komponententräger auf im Übergabebefehl konfigurierte Komponententräger beziehen, mit Ausnahme der Komponententräger, die das Direktzugriffverfahren durchführen.

23. Endgerät nach Anspruch 22, wenn das Übergabeverfahren ein Direktzugriffverfahren ist, ist das erste Datenkommunikationsmodul ferner konfiguriert, um die Datenkommunikation mit der Quellzelle zu beenden, nachdem das Direktzugriffverfahren die Übergabe an die Zielzelle abgeschlossen hat.

24. Endgerät nach Anspruch 23, während es das Direktzugriffverfahren mit Konflikten zur Übergabe an die Zielzelle durchführt, ist das Kommunikationsmodul ferner konfiguriert, um eine Direktzugriffpräambel zu senden, die einen gemeinsamen Präambelcode zur Zielzelle trägt und eine von der Zielzelle direkt oder über die Quellzelle gesendete Direktzugriffantwortnachricht empfängt, wobei die Nachricht die Zeitvorschub- (TA) und/oder Uplink-Granting-Informationen trägt, eine Nachricht3 an die Zielzelle sendet, wobei die Nachricht3 ein C-RNTI des Endgeräts an der Zielzelle trägt, eine Nachricht4 von der Zielzelle empfängt, die eine PDCCH-Signalisierung einer physikalischen Schicht enthält und bestätigt, dass der Direktzugriffkonflikt gelöst ist, und eine Nachricht5 an die Zielzelle sendet, wobei die Nachricht5 verwendet werden, um einen Abschluss des Übergabeverfahrens anzuzeigen.

25. Endgerät nach Anspruch 23, während es das Zufallszugriffverfahren ohne Konflikt zur Übergabe an die Zielzelle durchführt, ist das Kommunikationsmodul ferner konfiguriert, um eine Direktzugriffpräambel an die Zielzelle zu senden, wobei die Direktzugriffpräambel eine dedizierte Ressource ist, die für das Endgerät durch die Zielzelle konfiguriert ist, eine von der Zielzelle direkt oder über die Quellzelle gesendete Direktzugriffantwortnachricht empfängt und eine Nachricht3 direkt an die Zielzelle sendet, wobei die Nachricht3 verwendet wird, um einen Abschluss des Übergabeverfahrens anzuzeigen.

26. Endgerät nach Anspruch 23, nach dem Erfolg des Übergabeverfahrens ist das Kommunikationsmodul ferner konfiguriert, um die Konfiguration eines Hochschichtprotokolls nach dem Übergabebefehl zu aktualisieren, wobei das Hochschichtprotokoll tragäerunabhängige PDCP-, RLC- und MAC-Schichtprotokolle umfasst.

27. Endgerät nach einem der Ansprüche 22 bis 26, wobei das Kommunikationsmodul eines der folgenden umfasst: ein RACH-Modul mit Direktzugriff und ein zweites Datenkommunikationsmodul.

28. Endgerät nach Anspruch 27, wobei das zweite Datenkommunikationsmodul ferner konfiguriert ist, damit eine Datenkommunikation nach oder vor Beendigung der Datenkommunikation mit der Quellzelle durch das erste Datenkommunikationsmodul mit der Zielzelle gestartet wird und eine vollständige Übergabenachricht an die Zielzelle gesendet wird, nachdem ein Erfolg des Übergabeverfahrens bestimmt wurde.

## Revendications

1. Procédé de transfert, comprenant les étapes de :
un terminal recevant une commande de transfert, dans lequel la commande de transfert est utilisée pour indiquer que le terminal devrait être transféré vers une cellule cible ;
le terminal réalisant un processus de transfert de manière à ce que celui-ci soit transféré vers la cellule cible et conservant une communication de données avec une cellule source jusqu'à ce qu'un processus de transfert réussi soit déterminé ;
le procédé étant **caractérisé en ce que**, après que le terminal ait reçu la commande de transfert et avant que le processus de transfert ait réussi, une ou plusieurs porteuses en liaison montante de composant et/ou une ou plusieurs porteuses en liaison descendante de composant mettent à jour une configuration respective d'un protocole sous-jacent selon la commande de transfert et effectuent des processus d'accès aléatoires respectifs avec la cellule cible, et le protocole sous-jacent est un protocole de sous-couche de contrôle d'accès au support (MAC) lié à une porteuse et un protocole de couche physique;
dans lequel après la réussite du processus de transfert, le terminal met à jour la configuration d'un protocole sous-jacent d'autres porteuses de composant selon la commande de transfert, dans lequel les autres porteuses de composant se réfèrent à des porteuses de composant configurées dans la commande de transfert excluant les porteuses de composant effectuant le processus d'accès aléatoire.

2. Procédé selon la revendication 1, dans lequel le processus de transfert comprend : un processus d'accès aléatoire.

3. Procédé selon la revendication 2, après que le terminal ait achevé le processus d'accès aléatoire de son propre transfert vers la cellule cible, le procédé comprenant de plus :
le terminal achevant la communication des données avec la cellule source.

4. Procédé selon la revendication 3, après que le terminal ait achevé le processus d'accès aléatoire de son propre transfert vers la cellule cible, le procédé comprenant de plus :
le terminal démarrant une communication des données avec la cellule cible.

5. Procédé selon la revendication 4, dans lequel le processus d'accès aléatoire comprend l'un des suivants : un processus d'accès aléatoire avec conflits et un processus d'accès aléatoire sans conflit.

6. Procédé selon la revendication 5, dans lequel le processus d'accès aléatoire avec conflits, réalisé par le terminal afin d'être transféré vers la cellule cible, comprend les étapes suivantes :
le terminal envoyant un préambule d'accès aléatoire à la cellule cible ;
le terminal recevant un message de réponse d'accès aléatoire provenant de la cellule cible ;
le terminal recevant un Message3 à la cellule cible, dans lequel le Message3 transporte une identité temporaire de réseau radio cellulaire (C-RNTI) du terminal au niveau de la cellule cible ; et
le terminal recevant un Message4 provenant de la cellule cible, confirmant qu'un conflit d'accès aléatoire est résolu.

7. Procédé selon la revendication 6, dans lequel le Message3 est soit un message de sous-couche de contrôle d'accès au support (MAC) soit un message de couche physique.

8. Procédé selon la revendication 7, dans lequel le Message3 est une cellule de contrôle de la sous-couche de MAC.

9. Procédé selon la revendication 6, dans lequel le Message4 est soit un message de sous-couche de MAC soit un message de couche physique.

10. Procédé selon la revendication 9, dans lequel le Message4 contient une signalisation d'un canal de commande de liaison descendante physique de couche physique (PDCCH), dans lequel la signalisation du PDCCH contient des contenus du C-RNTI du terminal au niveau de la cellule cible.

11. Procédé selon la revendication 6, dans lequel lorsque le terminal reçoit le Message4 et confirme que le conflit d'accès aléatoire est résolu, le terminal détermine que le processus de transfert a réussi.

12. Procédé selon la revendication 6, dans lequel la cellule cible est configurée pour envoyer le message de réponse d'accès aléatoire et/ou le Message4 au terminal directement ou via la cellule source ; et le terminal est configuré pour envoyer le Message3 à la cellule cible directement ou via la cellule source.

13. Procédé selon la revendication 5, dans lequel le processus d'accès aléatoire sans conflit, réalisé par le terminal afin d'être transféré vers la cellule cible, comprend les étapes suivantes :
le terminal envoyant un préambule d'accès aléatoire à la cellule cible, dans lequel le préambule d'accès aléatoire est une ressource dédiée configurée pour le terminal par la cellule cible ; et
le terminal recevant un message de réponse d'accès aléatoire provenant de la cellule cible.

14. Procédé selon la revendication 13, dans lequel la cellule cible est configurée pour envoyer le message de réponse d'accès aléatoire au terminal directement ou via la cellule source.

15. Procédé selon la revendication 13, dans lequel après que le terminal ait reçu le message de réponse d'accès aléatoire, le terminal détermine que le processus de transfert a réussi.

16. Procédé selon la revendication 11 ou 15, dans lequel après que le terminal ait déterminé que le processus de transfert a réussi, le terminal envoie un message complet de transfert à la cellule cible.

17. Procédé selon l'une quelconque des revendications de 1 à 15, dans lequel après la réussite du processus de transfert, le terminal met à jour la configuration d'un protocole de couche haute selon la commande de transfert.

18. Procédé selon la revendication 17, dans lequel le protocole de couche haute comprend un protocole de convergence de données par paquets non lié à une porteuse (PDCP), un contrôle de liaison hertzienne (RLC) et des protocoles de sous-couche de contrôle d'accès au support.

19. Procédé selon la revendication 17, dans lequel le protocole de couche haute comprend un protocole de couche de contrôle de ressources radio (RRC) non lié à la porteuse.

20. Procédé selon l'une quelconque des revendications de 1 à 15, dans lequel après la réussite du processus de transfert, le terminal accomplit un processus de réinitialisation d'un protocole d'interface utilisateur, dans lequel le processus de réinitialisation comprend la réinitialisation de la sous-couche de contrôle d'accès au support, la reconstruction de couche PDCP et la reconstruction de couche RLC.

21. Procédé selon la revendication 20, dans lequel le protocole d'interface utilisateur comprend les protocoles de couche PDCP, RLC et de sous-couche de contrôle d'accès au support.

22. Terminal, comprenant :
un module de transfert configuré pour recevoir une commande de transfert, dans lequel la commande de transfert est utilisée pour indiquer que le terminal devrait être transféré vers une cellule cible ;
un module de communication configuré pour réaliser un processus de transfert de manière à ce que celui-ci soit transféré vers la cellule cible ; et
un premier module de communication de données configuré pour conserver une communication des données avec une cellule source jusqu'à ce qu'à la réussite du processus de transfert ait été déterminée ;
le terminal étant **caractérisé en ce que**, après que le module de transfert ait reçu la commande de transfert et avant que le processus de transfert ait réussi, le module de communication comporte une ou plusieurs porteuses en liaison montante de composant et/ou une ou plusieurs porteuses en liaison descendante de composant mettant à jour une configuration respective d'un protocole sous-jacent selon la commande de transfert et effectuant des processus d'accès aléatoires respectifs avec la cellule cible, dans lequel le protocole sous-jacent est un protocole de sous-couche de contrôle d'accès au support lié à une porteuse et un protocole de couche physique ;
dans lequel après la réussite du processus de transfert, le module de communication est de plus configuré pour mettre à jour la configuration d'un protocole sous-jacent d'autres porteuses de composant selon la commande de transfert, dans lequel les autres porteuses de composant se réfèrent à des porteuses de composant configurées dans la commande de transfert excluant les porteuses de composant effectuant le processus d'accès aléatoire.

23. Terminal selon la revendication 22, dans lequel si le processus de transfert est un processus d'accès aléatoire, le premier module de communication de données est de plus configuré pour terminer la communication de données avec la cellule source après avoir achevé le processus d'accès aléatoire de son transfert vers la cellule cible.

24. Terminal selon la revendication 23, dans lequel tout en effectuant le processus d'accès aléatoire avec des conflits de son transfert vers la cellule cible, le module de communication est de plus configuré pour envoyer un préambule d'accès aléatoire qui transporte un code de préambule commun vers la cellule cible, reçoit un message de réponse d'accès aléatoire envoyé par la cellule cible directement ou via la cellule source, le message transportant l'anticipation de durée (TA) et/ou des informations d'octroi de liaison montante, envoie un Message3 à la cellule cible, le Message3 transportant un C-RNTI du terminal au niveau de la cellule cible, reçoit de la cellule cible un Message4 qui contient une signalisation PDCCH de couche physique et confirme que le conflit d'accès aléatoire est résolu, et envoie un Message5 à la cellule cible, le Message5 est utilisé pour indiquer l'achèvement du processus de transfert.

25. Terminal selon la revendication 23, dans lequel pendant qu'il effectue le processus d'accès aléatoire sans conflit de son transfert vers la cellule cible, le module de communication est de plus configuré pour envoyer un préambule d'accès aléatoire à la cellule cible, dans lequel le préambule d'accès aléatoire est une ressource dédiée configurée pour le terminal par la cellule cible, reçoit un message de réponse d'accès aléatoire envoyé par la cellule cible directement ou via la cellule source, et envoie directement un Message3 à la cellule cible, dans lequel le Message3 est utilisé pour indiquer l'achèvement du processus de transfert.

26. Terminal selon la revendication 23, dans lequel après la réussite du processus de transfert, le module de communication est de plus configuré pour mettre à jour la configuration d'un protocole de couche haute selon la commande de transfert, dans lequel le protocole de couche haute comprend des protocoles PDCP, de RLC et de sous-couche de contrôle d'accès au support non liés à la porteuse.

27. Terminal selon l'une quelconque des revendications de 22 à 26, dans lequel le module de communication comprend l'un des modules suivants : un module de canal d'accès aléatoire et un second module de communication de données.

28. Terminal selon la revendication 27, dans lequel le second module de communication de données est de plus configuré pour, après ou avant que le premier module de communication de données n'achève la communication des données avec la cellule source, démarrer une communication des données avec la cellule cible et envoyer un message complet de transfert à la cellule cible après détermination de la réussite du processus de transfert.
